# EUROPÄISCHE PATENTSCHRIFT

(11) **EP 0 266 496 B1**
(45) Veröffentlichungstag und Bekanntmachung des Hinweises auf die Patenterteilung: **31.03.1993**
(21) Anmeldenummer: 87111506.9
(22) Anmeldetag: 08.08.1987
(51) Int. Cl.: B60L 13/04

(54) **Schienenfahrzeug mit Spurkranzrädern**
Rail vehicle with wheels with flanges
Véhicule sur rails à roues à boudin

(30) Priorität: 06.11.1986 DE 3637844
(43) Veröffentlichungstag der Anmeldung: 11.05.1988
(73) Patentinhaber: MAN GHH Schienenverkehrstechnik GmbH, 90461 Nürnberg (DE)
(72) Erfinder: Bohn, Gerhard, Dr., D-8000 München 60 (DE); Günther, Christian, Dr., D-8013 Haar (DE)
(74) Vertreter: Merten, Fritz

(56) Entgegenhaltungen:
- DE-A- 1 947 980
- DE-A- 3 236 498
- FR-A- 2 347 245
- GB-A- 1 457 262

## Beschreibung

Die Erfindung betrifft ein Schienenfahrzeug gemäß dem Oberbegriff des Patentanspruchs, also mit konventioneller Spurführung (sog. Gleisfahrzeug).

Bei einem derartigen durch die DE-A-1 947 980 bekannten Schienenfahrzeug mit einem linearen Induktionsmotor sind Vorkehrungen zur Steuerung des Motorschubs abhängig von der Beladung (Last) getroffen derart, daß der Anker des Induktionsmotors mit der gefederten Fahrzeugladeplatte je nach Beladung auf- oder abbewegt wird mit der Folge einer Vergrößerung bzw. Verminderung des Luftspaltes (gegenüber dem Induktor) und damit des Motorschubes.

Darüber hinaus ist es durch die DE-A-32 36 498 schon bekannt, bei einem Gleisfahrzeug die Spurkranzräder durch fahrzeugseitige Dauermagnete zu entlasten, welche in Verbindung mit einem stationären Langstator-Linearmotor eine die Spurkranzräder hebende Kraftwirkung ausüben und dadurch das Eigengewicht und die Zuladung des Gleisfahrzeugs tragen sollen. Hierbei ist jedoch das Problem von Beladungsänderungen nur insoweit gelöst, daß das Gleisfahrzeug, wenn es leer ist, vor dem Abheben vom Gleis durch Abstandsrollen gesichert wird.

Aus FR-A-2 347 245 ist eine Magnetbahn bekannt, bei welcher die Magnetkraft in Abhängigkeit von der Beladung durch Änderung des magnetischen Widerstandes eines ferromagnetischen Magnetkerns auf mechanischem Wege bei Zunahme bzw, Abnahme der Beladung gesteuert wird.

Der Erfindung liegt daher bei einem Schienenfahrzeug der eingangs genannten Art die Aufgabe zugrunde, auch ohne derartige zusätzliche Abstandsrollen oder -räder durch Dauermagnete eine Entlastung der Spurkranzräder ohne Gefahr des Abhebens vom Gleis zu ermöglichen.

Diese Aufgabe ist gemäß dem Kennzeichen des Patentanspruchs gelöst. Hierbei macht sich die Erfindung die Erkenntnis zunutze, daß eine Voraussetzung für die Abhebesicherung der Spurkranzräder eine Veränderbarkeit ihrer Entlastung ist und daß hierzu der Dauermagnet eine Beeinflussungsmöglichkeit bietet durch eine vom Wagenkastenniveau abhängig veränderbare Konfiguration. Hierbei hat eine Kopplung des einzelnen Dauermagneten mit dem Wagenkasten in der im Anspruch gekennzeichneten Weise den Vorteil hoher Betriebszuverlässigkeit mit einfachem baulichen Aufwand.

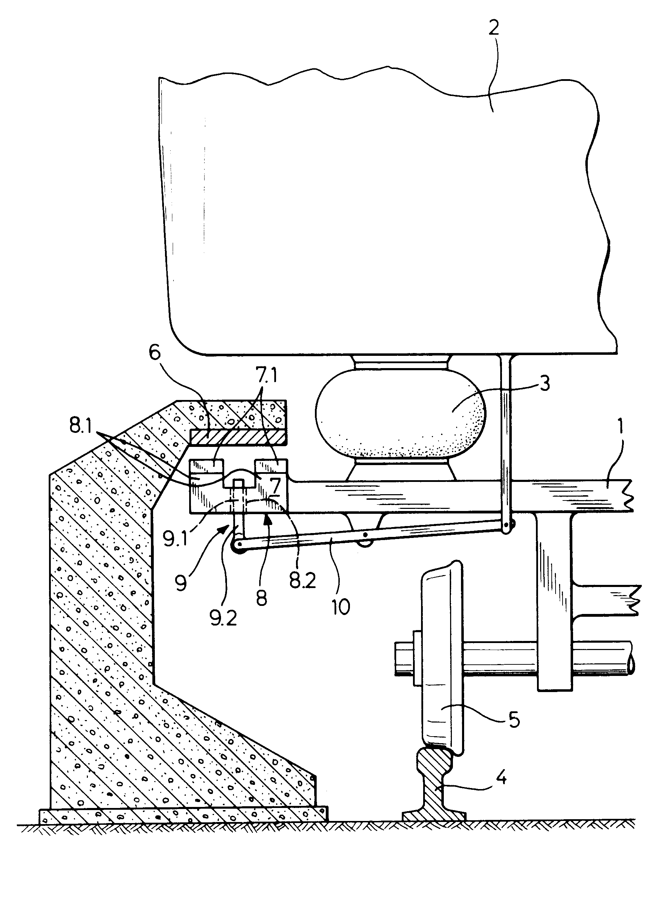

Nachfolgend wird die Erfindung anhand eines Ausführungsbeispieles näher erläutert. Dazu zeigt die Zeichnung schematisch im Querschnitt nur eine Seite eines Schienenfahrzeugs im Bereich seines Fahrwerks, auf dessen Gestell 1 ein Wagenkasten 2 über eine (Luft-)Federung 3 abgestützt ist. Die Spurführung des Schienenfahrzeugs längs eines Gleises 4 erfolgt mittels Spurkranzräder 5 am Gestell 1, welches zur Entlastung derselben bzw. zur Verminderung der Punktlast im Radaufstandspunkt je Spurkranzrad 5 mit einem auf eine längs des Gleises 4 sich erstreckende ferromagnetische Ankerschiene 6 anziehend wirkenden Dauermagneten 7 versehen ist. Dieser ist vorzugsweise auf eine bestimmte Entlastungs- bzw. magnetische Kraftwirkung bei voller Beladung (Last) des Wagenkastens 2 ausglegt. Dies bedingt die Möglichkeit der Minderung der Magnetkraft im Falle der teilweisen Beladung oder Leerung des Wagenkastens 2, um den Dauermagneten 7 gegen ein Anschlagen an der zugeordneten Ankerschiene 6 zu sichern und damit das Abheben des zugehörigen Spurkranzrades 5 vom Gleis 4 (infolge magnetischer Kraftwirkung) auszuschließen. Zu diesem Zweck sind Vorkehrungen getroffen, daß die entgegen der Radlast wirkende Magnetkraft von der Beladung (Last) des Wagenkastens 2 abhängig zwangsläufig gesteuert wird durch Erhöhung oder Verminderung des magnetischen Widerstandes eines ferromagnetischen Magnetkernes 8 auf mechanischem Wege bei Abnahme bzw. Zunahme der Beladung. Hierzu ist zum einen der beispielsweise für sämtliche Dauermagnete 7 einer Fahrzeugseite über deren gesamte Länge sich erstreckende Magnetkern 8 U-förmig ausgebildet und je Dauermagnet 7 an den Polflächen seiner beiden Kernschenkel 8.1 mit dauermagnetischen Polplatten 7.1 versehen. Zum anderen ist je Dauermagnet 7 ein zwischen den beiden Polplatten 7.1 den Magnetkern 8 durchquerender Anker 9 vorgesehen, welcher im betreffenden Kernloch 8.2 durch den Wagenkasten 2 in Wirkungsrichtung seiner Federung 3 längsverschiebbar ist. Der Anker 9 besteht aus einem unmagnetischen Längenabschnitt 9.1 und einem ferromagnetischen Längenabschnitt 9.2 jeweils zumindest von der Länge des Kernloches 8.2. Durch eine mit dem Wagenkasten 2 in Wirkungsrichtung seiner Federung 3 schwenkbar gekoppelte Schwinge 10 wird dieser Anker 9 derart längsverschoben, daß das Kernloch 8.2 bei unbeladenem Wagenkasten 2 vom unmagnetischen Längenabschnitt 9.1 ausgefüllt ist und damit der Dauermagnet 7 seine geringste Kraftwirkung auf die Ankerschiene 6 ausübt, dagegen das Kernloch 8.2 bei voll beladenem Wagenkasten 2 vom ferromagnetischen Längenabschnitt 9.2 ausgefüllt ist mit der Folge der maximalen Kraftwirkung des Dauermagneten 7. Selbstverständlich kann je nach Beladungszustand bzw. Niveau des Wagenkastens 2 der Anker 9 auch Tauchstellungen im Magnetkern 8 einnehmen, in welchen der ferromagnetische Längenabschnitt 9.2 das Kernloch 8.2 teilweise magnetisch überbrückt, so daß der magnetische Fluß der dauermagnetischen Polplatten 7.1 im Magnetkern 8 ansteigt gegenüber der dargestellten Tauchstellung mit voller Ausfüllung des Kernloches 8.2 durch den unmagnetischen Längenabschnitt 9.1 bei leerem Wagenkasten 2.

Das vorbeschriebene Prinzip der beladungsabhängigen Steuerung der Magnetkraft mittels eines mechanisch variierbaren magnetischen Widerstandes "Kernloch 8.2 mit teils unmagnetischem Anker" hat noch den Vorteil, daß trotz starrer Anordnung der Dauermagnete 7 am Gestell 1 mit einem relativ engen Luftspalt gegenüber der Ankerschiene 6 gearbeitet und damit Magnetgewicht eingespart werden kann. Selbstverständlich erstreckt sich eine solche Ankerschiene an jeder Seite des Gleises 4.

Im Falle von separaten Magnetkernen 8 der einzelnen Dauermagnete 7 kann auch eine Positionierung derselben gewählt werden , bei welcher die Kernschenkel 8.1 und Polplatten 7.1 in Fahrzeuglängsrichtung aufeinanderfolgen und damit die Dauermagnete 7 zugleich den Anker eines synchronen Langstatormotors bilden können.

## Patentansprüche

1. Schienenfahrzeug mit einer gefederten Abstützung seines Wagenkastens (2) auf einem Gestell (1) mit Spurkranzrädern (5) zur Führung und Abstützung in einem Gleis (4),
wobei am Gestell (1) auf längs des Gleises (4) sich erstreckende Ankerschienen (6) entgegen der Radlast anziehend wirkende Dauermagnete (7) angeordnet sind,
**dadurch gekennzeichnet**,
daß die Dauermagnete eine mit der Beladung (Last) des Wagenkastens (2) abhängig steuerbare Magnetkraft durch Erhöhung oder Verminderung des magnetischen Widerstandes eines ferromagnetischen Magnetkernes (8) auf mechanischem Wege bei Abnahme, bzw. Zunahme der Beladung besitzen,
daß je Dauermagnet (7) der ferromagnetische Magnetkern (8) U-förmig ausgebildet und an den Polflächen seiner beiden Kernschenkel (8.1) mit dauermagnetischen Polplatten (7.1) versehen ist, wobei dazwischen den Magnetkern (8) ein durch den Wagenkasten (2) in Wirkungsrichtung seiner Federung (3) längsverschieblicher Anker (9) durchquert, welcher aus einem unmagnetischen Längenabschnitt (9.1) und einem ferromagnetischen Längenabschnitt (9.2) jeweils zumindest von der Länge des zugeordneten Kernlochs (8.2) besteht,
und daß der Anker (9) durch eine mit dem Wagenkasten (2) in Wirkungsrichtung seiner Federung (3) schwenkbar gekoppelte Schwinge (10) derart längsverschiebbar ist,
daß das Kernloch (8.2) bei unbeladenem Wagenkasten (2) vom unmagnetischen Längenabschnitt (9.1) und bei voll beladenem Wagenkasten (2) vom ferromagnetischen Längenabschnitt (9.2) ausgefüllt ist.

## Claims

1. A rail vehicle having a sprung support for the wagon body (2) thereof on an understructure (1) with flanged wheels (5) for guiding and supporting it on a rail (4), wherein permanent magnets (7) which are attracted against the wheel load towards keeper rails (6) extending along the rail (4) are disposed on the understructure (1), characterised in that the permanent magnets have a magnetic force which can be controlled as a function of the load of the wagon body (2) as a result of the magnetic strength of a ferromagnetic core (8) being mechanically increased or reduced as the load increases or decreases respectively; in that for each permanent magnet (7) the ferromagnetic core (8) is U-shaped and is provided on the pole surfaces of its two core arms (8.1) with permanent magnet pole plates (7.1), wherein a keeper (9), which can be displaced longitudinally by the wagon body (2) in the direction in which its sprung device (3) acts, passes through the magnetic core (8) between the pole plates, which keeper (9) consists of a non-magnetic longitudinal section (9.1) and a ferromagnetic longitudinal section (9.2) which are each at least as long as the associated core hole (8.2); and in that the keeper (9) can be longitudinally displaced by a rocker arm (10) which is coupled to the wagon body (2) so as to pivot in the direction in which the sprung device (3) thereof acts such that the core hole (8.2) is occupied by the non-magnetic longitudinal section (9.1) when the wagon body (2) is unladen and by the ferromagnetic longitudinal section (9.2) when the wagon body (2) is fully laden.

## Revendications

1. Véhicule ferroviaire comportant un support suspendu de sa caisse (2) sur un châssis (1) comportant des roues à boudin (5) pour guidage et soutènement dans une voie (4), des aimants permanents (7), agissant en traction à l'encontre de la charge de la roue sur des rails d'induit (6) s'étendant le long de la vole (4), caractérisé en se que les aimants permanents présentent une force magnétique pouvant être commandée en fonction de la charge de la caisse (2), par une augmentation ou une diminution de la résistance magnétique d'un noyau ferromagnétique (8), et ce d'une manière mécanique, lors d'une diminution ou d'une augmentation de la charge ; que, pour chaque aimant permanent (7), le noyau ferromagnétique (8) a la forme d'un U et est, sur les surfaces polaires de ses deux branches (8.1), pourvu de plaques polaires à magnétisation permanente (7.1), plaques polaires entre lesquelles un induit (9), pouvant coulisser dans le sens longitudinal en traversent la caisse (2) dans le sens d'action de sa suspension (3), traverse le noyau magnétique (8), induit qui est constitué d'un segment longitudinal non magnétique (9.1) et d'un segment longitudinal ferromagnétique (9.2), ces deux segments ayant au moins la longueur du trou correspondant (8.2) dans le noyau ; et que l'induit (9) peut coulisser longitudinalement grâce à une bielle oscillante (10), couplée en pivotement à la caisse (2) dans le sens d'action de sa suspension (3), de telle sorte que le trou (8.2) du noyau soit rempli du segment longitudinal non magnétique (9.1) quand la caisse (2) n'est pas chargée, et soit rempli du segment longitudinal ferromognétique (9.2) quand la caisse (2) est entièrement chargée.
